Europäisches Patentamt

European Patent Office

Office européen des brevets

(19)

(11) Veröffentlichungsnummer: **0 001 039**
**B1**

(12) **EUROPÄISCHE PATENTSCHRIFT**

(21) Anmeldenummer: **78100348.8**

(22) Anmeldetag: **11.07.78**

(51) Int. Cl.³: **C 08 G 69/26**

(54) Transparente Polyamide

(30) Priorität: **18.08.77 DE 2737257**

(43) Veröffentlichungstag der Anmeldung:
**21.03.79 Patentblatt 79/06**

(45) Bekanntmachung des Hinweises auf die Patenterteilung:
**03.09.80 Patentblatt 80/18**

(84) Benannte Vertragsstaaten:
**DE FR GB**

(56) Entgegenhaltungen:
**DE - A - 2 217 016**
**FR - A - 1 118 435**
**FR - A - 2 134 415**
**US - A - 3 842 045**

(73) Patentinhaber: **Bayer AG**
**Zentralbereich Patente, Marken und Lizenzen**
**D - 5090 Leverkusen 1, Bayerwerk (DE)**

(72) Erfinder: **Meyer, Rolf-Volker, Dr.**
**Bodelschwinghstrasse 12**
**D - 4150 Krefeld (DE)**
**Dhein, Rolf, Dr.**
**Deswatinesstrasse 30**
**D - 4150 Krefeld (DE)**
**Fahnler, Friedrich**
**Wimmersweg 60**
**D - 4150 Krefeld (DE)**

### Transparente Polyamide

Vorliegende Erfindung betrifft transparente, thermoplastisch verformbare Copolyamide mit hoher Wärmeformbeständigkeit.

Insbesondere bezieht sich die Erfindung auf Polyamide. die durch Polykondensation des Isomerengemisches aus 4,4'-Diamino-dicyclohexylmethan, 2,4'-Diaminodicyclohexylmethan und 2,2'-Diaminodicyclohexylmethan und gegebenenfalls geringeren Mengen aliphatischer und/oder weiterer cycloaliphatischer Diamine als Diaminkomponente mit Azelainsäure sowie gegebenenfalls Isophthalsäure und/oder Adipinsäure als Dicarbonsäurekomponente unter Verwendung üblicher Verfahrensweisen hergestellt werden.

Für viele Einsatzgebiete ist die von den üblichen Polyamiden wie 6-Polyamid oder 6,6-Polyamid bekannte günstige Eigenschaftskombination gegenüber anderen thermoplastisch verarbeitbaren Materialien von großen Vorteil. Wegen der Teilkristallinität dieser Polyamid-Typen, die einen großen Teil der besonders guten Eigenschaften verursacht, sind jedoch Formteile aus diesen Polyamiden immer opak und daher in allen Fällen, in denen transparente Formteile gefordert werden, nicht verwendbar.

Es hat daher nicht an Versuchen gefehlt, Polyamide herzustellen, die neben ihrem amorphen Charakter und der hiermit verbundenen Transparenz auch noch die günstigen Eigenschaften von Polyamid-6 oder -6,6 aufweisen.

Einer dieser Versuche ist der Einsatz von 4,4'-Diaminodicyclohexylmethanen bei der Herstellung von Polyamiden. So sind transparente Polyamide aus dem genannten Amin und aromatischen Dicarbonsäuren wie Isophthalsäure (US—P 2 696 482) oder Terephthalsäure (US—P 2 516 585) bekannt. Diese Produkte sind jedoch wegen ihrer hohen Schmelzviskosität thermoplastisch nur schwierig verarbeitbar.

Es wurde auch versucht, transparente Polyamide aus 4,4'-Diaminodicyclohexylmethanen und weiteren polyamidbildenden Komponenten wie Adipinsäure, Hexamethylendiamin und ε-Caprolactam herzustellen. Diese Polyamide sind jedoch äußerst unbeständig gegen Lösungsmittel und bilden unter Eintrübung Sphärolithe.

Die in der DOS 1 595 354 beschriebenen Polyamide auf Basis von Bis-(4-aminocyclohexyl)-propan und Adipinsäure neigen zwar weniger zur Kristallisation, die thermoplastische Verarbeitung dieser Polyamide ist jedoch infolge ihrer hohen Erweichungspunkte erheblich erschwert.

Niedriger schmelzende Polyamide aus 4,4'-Diaminodicyclohexylmethanen und aliphatischen Dicarbonsäuren wie Adipinsäure (US—P 2 585 163) sind entweder nicht transparent oder neigen zur Nachkristallisation und damit zur Eintrübung.

In der DOS 1 933 395 werden transparente Polyamide beschrieben, die 4,4'-Diaminodicyclohexylmethanen und Hexamethylendiamin als Diaminkomponenten und Isophthalsäure und Terephthalsäure als Dicarbonsäuren in eng definierten Mischungsverhältnissen enthalten müssen.

Ein besonderer Nachteil dieser Polyamide ist, daß der Anteil der 4,4'-Diaminodicyclohexylmethane, die einen stark verbessernden Einfluß auf die Wärmeformbeständigkeit des Polyamids haben, nur maximal 50 Mol-%, d.h. maximal ca. 65 Gew.-% betragen darf. Produkte mit höherem Gehalt an 4,4'-Diaminodicyclohexylmethanen haben eine zu hohe Schmelzviskosität, so daß sie nach den in der Praxis üblichen Spritzgußverfahren nicht mehr verformt werden können.

Die zwingend vorgeschriebene hohe Anteil an Hexamethylendiamin hat dadurch zur Folge, daß die Produkte eine unbefriedigende Wärmeformbeständigkeit zeigen.

In der DOS 2 125 906 sind Copolyamide aus 4,4'-Diaminodicyclohexylmethan und 3-Ethyl-1,10-decandicarbonsäure beschrieben. Die transparenten produkte sind zwar gut verarbeitbar, haben jedoch infolge der langen und verzweigten C-Kette der Dicarbonsäure mit nur 130°C eine unzureichende Wärmeformbeständigkeit. Darüber hinaus ist die unbedingt erforderliche 3-Ethyl-1,10-decandicarbonsäure nur schwer zugänglich.

Schließlich sind aus der DOS 2 642 244 transparente Polyamide aus 4,4'-Diaminodicyclohexylmethanen, Isophthalsäure und u.a. Salzen aus aliphatischen Dicarbonsäuren und aliphatischen Diaminen, bei denen je Amidgruppe die durchschnittliche Zahl der Methylengruppen mindestens 9 betragen muß, bekannt. Diese Polyamide zeigen aber offenbar wegen der langkettigen Anteile eine unzureichende Beständigkeit der Transparenz im kochenden Wasser und eine nicht ausreichende Wärmeformbeständigkeit.

Die bisher vorgeschlagenen transparenten Polyamide zeigen daher Nachteile bezüglich chemischer Beständigkeit, Erweichungstemperatur und Schmelzformbarkeit.

Außerdem werden gemäß dem Stand der Technik immer reines 4,4'-Diaminodicyclohexylmethane verwendet, wobei nur die Verhältnisse der verschiedenen Stereoisomeren (trans, trans; trans, cis; cis, cis) unterschiedlich sein können. Stellungsisomere Diaminodicyclohexylmethane wie 2,4'-Diaminodicyclohexylmethane und/oder 2,2'-Diaminodicyclohexylmethane werden nicht mitverwendet. Dies gilt auch für die Polyamide, die gemäß der Lehre der US—PS 3 842 045 durch Polykondensation

von 4,4'-Diaminodicyclohexylmethanen und einem Dicarbonsäuregemisch aus Dodecandicarbonsäure und Azelainsäure erhalten werden. Auch in der europäischen Patentanmeldung 0 000 492 werden nur reine 4,4'-Diaminodicyclohexylmethane und gegebenenfalls weitere Diamine mit Azelainsäure enthaltenden Dicarbonsäuregemischen zu Polyamiden kondensiert.

Der Einsatz von reinen 4,4'-Diaminodicyclohexyldiaminen ist umso bemerkenswerter, da bei der Herstellung von 4,4'-Diaminodicyclohexylmethanen aus Diaminodiphenylmethanen technischer Qualität vor der Hydrierung eine zusätzliche Feindestillation durchgeführt, oder aber ein spezielles Herstellverfahren für 4,4'-Diaminodiphenylmethane gewählt werden muß.

Überraschend wurde nun gefunden, daß man transparente Copolyamide auch aus einem Gemisch stellungsisomerer Diaminodicyclohexylmethane, wie es z.B. bei der Hydrierung von Diaminodiphenylmethan technischer Qualität anfällt, und gegebenenfalls kleineren Mengen eines aliphatischen und/oder eines weiteren cycloaliphatischen Diamins als Diaminkomponente sowie einem Gemisch aus Azelainsäure und gegebenenfalls Isophthalsäure und/oder Adipinsäure herstellen kann, die die genannten Nachteile nicht aufweisen.

Die produkte lassen sich ohne Schwierigkeiten zu transparenten thermoplastischen Formkörpern mit hoher Wärmeformbeständigkeit, gutem Zähigkeitsniveau und guter Beständigkeit gegen Lösungsmittel verarbeiten.

Gegenstand der Erfindung sind somit transparente, thermoplastisch verformbare Copolyamide mit einer relativen Viskosität von mindestens 2,2 (gemessen in 1%iger Lösung des Polyamids in m-Kresol bei 25°C), erhalten durch Polycondensation von

1) 70—100 Mol-%, vorzugsweise 80—100 Mol-%, eines Gemisches stellungsisomerer Diaminocyclohexylmethane, das sich zusammensetzt aus

a) 70—99 Mol-%, bevorzugt 75—95 Mol-%, 4,4'-Diamino-Isomeren

b) 1—30 Mol-%, bevorzugt 3—20 Mol-%, 2,4'-Diamino-Isomeren

c) 0—2 Mol-%, bevorzugt 0—1 Mol-%, 2,2'-Diamino-Isomeren und

2) 0—30 Mol-%, vorzugsweise 0—20 Mol-%, eines nichtcyclischen aliphatischen Diamins mit $C_6$—$C_{12}$ und/oder eines von den unter 1) genannten Diaminodicyclohexylmethanen unterschiedlichen cycloaliphatischen Diamins mit $C_8$—$C_{15}$, wobei das molare Verhältnis aller cycloaliphatischer Diamine aus 1) und 2) zu den nicht cyclischen aliphatischen Diaminen mindestens 4:1, vorzugsweise 5:1, betragen soll, und die Summe aus a)—c) bzw. 1)—2) immer 100 Mol-% ergeben muß, und

3) äquivalenten Mengen Dicarbonsäuren bestehend aus

d) 50—100 Mol-%, vorzugsweise 70—85 Mol-%, Azelainsäure und

e) 50—0 Mol-%, vorzugsweise 30—15 Mol-%, Isophthalsäure und/oder Adipinsäure, wobei sich entweder die Dicarbonsäurekomponente aus wenigstens 2 Dicarbonsäuren oder die Diaminkomponente aus dem unter 1) genannten Isomerengemisch und wenigstens einem unter 2) genannten Diamin zusammensetzen und die Summe aus d) + e) immer 100 Mol-% betragen muß.

Bevorzugt sind Copolyamide, die ein Gemisch stellungsisomerer Diaminodicyclohexylmethane als einzige Diaminkomponente enthalten.

Als nichtcyclische, aliphatische Diamine können vorzugsweise Hexamethylendiamin oder Trimethylhexamethylendiamin verwendet werden.

Die Stellungsisomeren des Diaminodicyclohexylmethan-Gemisches bestehen ihrerseits jedes aus trans, trans-, cis, trans, und zu einem geringen Anteil aus cis, cis-Isomeren.

Für die Kondensation wird vorzugsweise das durch Kondensation von Anilin mit Formaldehyd erhaltene Diaminodiphenylmethan-Isomerengemisch, das anschließend hydriert wird, eingesetzt. Das Isomerengemisch sollte vorzugsweise einen Schmelzpunkt von ca. 30°C haben. Bei einem Anteil der 4,4'-Isomeren unter 90% kann das erfindungsgemäß verwendete Gemisch jedoch auch bei Raumtemperatur flüssig sein.

Außer den nichtcyclischen, aliphatischen Diaminen, die man in Mengen von 0—20 Mol-%, vorzugsweise 0—10 Mol-%, bei der Polykondensation mitverwenden kann, können noch weitere cycloaliphatische Diamine mit $C_8$—$C_{15}$, wie z.B. 1,3- bzw. 1,4-Bis-aminomethyl-cyclohexan, Isophorondiamin, 2,5 - Bis - aminomethyltricyclo - (2.2.1) - heptan oder 4,4'-Diamindicyclohexylpropan mit einkondensiert werden, ohne daß die Transparenz der Polyamide verloren geht.

Die zur Kondensation verwendete Isophthalsäure kann z.B. herstellungsbedingt, bis zu 10% Terephthalsäure enthalten.

Die Herstellung der Copolyamide erfolgt nach den für die Herstellung von Polyamiden aus Diaminen und Dicarbonsäuren üblichen Verfahren. Man kann des Gemisch der Ausgangskomponenten auf Temperaturen zwischen 190 und 230°C erhitzen und in diesem Temperaturbereich vorkondensieren. Nach Beendigung dieser Vorkondensation wird bei Temperaturen zwischen 240 und 300°C zu Ende polykondensiert.

Gegen Ende der Polymerisation kann unter Vakuum kondensiert werden, dies ist jedoch keinesfalls erforderlich.

Die Vorkondensation kann mit oder ohne Zusatz von Wasser erfolgen; sie kann bei Atmosphärendruck oder in geschlossenen Autoklaven unter dem Dampfdruck des Wassers durchgeführt werden.

Vorzugsweise wird in Gegenwart von 10 bis 20 Gew.-% Wasser bei geschlossenen Autoklaven vorkondensiert. Die Polykondensation ausgehend von den Salzen der Monomeren durchzuführen, ist, besonders wenn die Vorkondensation in Gegenwart von Wasser stattfindet, nicht erforderlich.

Der während der Polykondensation auftretende Verlust an Diamin wird vorzugsweise durch Einsatz eines ent-sprechenden Überschusses an Diamin kompensiert.

Das Molekulargewicht der Polyamide kann in bekannter Weise durch Carbonsäuren oder Amine geregelt werden.

Die relative Viskosität der erfindungsgemäßen Copolyamide sollte mindestens 2,2 betragen, vorzugsweise zwischen 2,4 und 3,5 liegen (gemessen an einer 1%igen Lösung des Polyamids in m-Kresol bei 25°C in einem Übbelohde-Viskosimeter).

Polyamiden gemäß der Erfindung können auch verschiedene Zusätze, die für übliche Polyamide angewendet werden, zugegeben werden, z.B. Flammschutzmittel, Hitze- und UV-Stabilisatoren, Antioxydantien und Pigmente, wobei die Zugabe während irgendeiner gewünschten Stufe vor oder nach der Polymerisation in Übereinstimmung mit bekannten Ansätzen erfolgt. Gleichfalls sind die mit 10—50 Gew.-% Glasfasern verstärkten erfindungsgemäßen Polyamide hochwertige Produkte.

Die Polyamide gemäß der Erfindung besitzen eine ausgezeichnete Transparenz, chemische Beständigkeit, Hitzestabilität und Schmelzformbarkeit und sind als Formmasse für die Herstellung von verschiedenen geformten und preßgeformten Gegenständen, z.B. Folien, Filmen, Platten, Rohren, Stangen und Behältern verschiedener Art wertvoll.

### Beispiel 1

Man füllt 3.76 kg (20 mol) Azelainsäure, 0,83 kg (5 Mol) Isophthalsäure und 5,25 kg (25 Mol) hydr. Diaminodiphenylmethan (I) zusammen mit 2 l Wasser in den Autoklaven. Zur Molgewichtsstabilierung werden 40 g Benzosäure und zum Ausgleich während der Polykondensation auftretender Diaminverluste 50 g hydr. Diaminodiphenylmethan (I) hinzugefügt.

Man heizt unter $N_2$-Atmosphäre auf ca. 200°C auf, wobei bei 100°C das Rührwerk eingeschaltet wird und hält das Reaktionsgemisch 4 h unter Eigendruck. Dann wird langsam entspannt, auf 270°C erhitzt und noch 7 h bei 270°C polykondensiert.

Das entstandene fast farblose Polyamid ($\eta_{rel}$ 2,7) wird durch ein Wassserbad abgesponnen, granuliert und getrocknet.

An Normkleinstäben wird gemäß DIN 53 460 eine Wärmeformbeständigkeit nach Vicat (Methode B) von 156°C, nach DIN 53 453 eine Kerbschlagzähigkeit von 6,3 kJ/m², eine Beigefestigkeit von 114 MPa (DIN 53 452) gemessen. Die Prüfung auf Schlagzähigkeit (DIN 53 453) ergab bei 10 Proben keinen Bruch.

### Beispiel 2—7

Die Versuche wurden entsprechend der in Beispiel 1 beschriebenen Verfahrensweise und in gleicher Größenordnung durchgeführt.

Die Zusammensetzung der Ausgangsmonomeren sowie einige Eigenschaften der erhaltenen Polyamide sind in Tabelle 1 zusammengefaßt, wobei die relativen Mengen der Ausgangsstoffe in Mol.-% angegeben sind.

TABELLE 1

| Bsp. Nr. | Zusammensetzung der Ausgangs-monomerin (Mol–%) | | | | Eigenschaften der Polyamide Wärmeformbe-ständigkeit | | | |
|---|---|---|---|---|---|---|---|---|
| | Azelain-säure | Isophthal-säure | Adipin-säure | Diamin [x] | $\eta_{rel}$ | Vicat °C | Schlag-zähigkeit | Kerbschlag-zähigkeit (kJ/m²) |
| 1 | 80 | 20 | — | 100 | 2,7 | 156 | n.g. | 6,3 |
| 2 | 70 | 30 | — | 100 | 2,6 | 172 | n.g. | 4,8 |
| 3 | 70 | 15 | 15 | 100 | 2,8 | 150 | n.g. | 4,8 |
| 4 | 90 | — | 10 | 100 | 3,1 | 161 | 95 kJ/m² | 5,2 |
| 5 | 80 | — | 20 | 100 | 3,0 | 155 | n.g. | 4,7 |
| 6 | 70 | — | 30 | 100 | 3,2 | 150 | n.g. | 4,5 |
| 7 | 50 | 25 | 25 | 100 | 2,5 | 177 | n.g. | 3.8 |

[x] hydr. Diaminodiphenylmethan (I) : 94,7 Mol % 4,4'-Diaminodicyclohexylmethan
5,1 Mol % 2,4'-Diaminodicyclohexylmethan
0,2 Mol % 2,2'-Diaminodicyclohexylmethan

n.g. = nicht gebrochen.

### Beispiel 8

Wie in Beispiel 1 beschrieben, wird aus 3,76 kg (20 Mol) Azelainsäure, 0,73 kg (5 Mol) Adipinsäure, 4,72 kg (22,5 Mol) hydr. Diaminodiphenylmethan (I) und 0,29 kg (2,5 Mol) Hexamethylendiamin ein Polyamid hergestellt.

Das schwach gelbstichige Polyamid hatte eine rel. Viskosität von 2,9, eine Wärmeformbeständigkeit von 141°C, eine Schlagzähigkeit von 90,5 kJ/m² (9 Proben nicht gebrochen) und eine Kerbschlagzähigkeit von 4,8 kJ/m².

### Beispiel 9

Wie in Beispiel 1 beschrieben, wird aus 4,70 kg (25 Mol) Azelainsäure, 4,20 kg (20 Mol) hydr. Diaminodiphenylmethan (I) und 0,85 kg (5 Mol) Isophorondiamin ein Polyamid hergestellt.

Das schwach gelbstichige Polyamid hatte eine relative Viskosität von 2,7 und eine Wärmeformbeständigkeit von 145°C.

### Beispiel 10

Beispiel 1 wird wiederholt mit dem Unterschied, daß als Diaminkomponente hydr. Diaminodiphenylmethan (II), das sich zusammensetzt aus 88,5 Mol-% 4,4'-; 11,0 Mol-% 2,4'- und 0,5 Mol-% 2,2'-Diaminodicyclohexylmethan eingesetzt wird.

Das entstandene fast farblose transparente Produkt hat eine relative Viskosität von 2,6, eine Wärmeformbeständigkeit nach Vicat von 151°C, Beigefestigkeit von 116 MPa und eine Kerbschlagzähigkeit von 6,3 kJ/m². Die Prüfung auf Schlagzähigkeit ergab bei 10 Proben keinen Bruch.

### Beispiel 11

Beispiel 1 wird wiederholt mit dem Unterschied, daß als Diaminkomponente hydr. Diaminodiphenylmethan (III), das sich zusammensetzt aus 79,5 Mol-% 4,4'-; 19,5 Mol-% 2,4'- und 1,0 Mol-% 2,2'-Diaminodicyclohexylmethan, eingesetzt wird.

Das fast farblose transparente Produkt hat folgende Kenndaten: $\eta_{rel}$: 2,5 Wärmeformbeständigkeit: 145°C (nach Vicat) Kerbschlagzähigkeit: 5,8 kJ/m²; Schlagzähigkeit: 10 × nicht gebr.

### Vergleichsversuche A—F

Diese Versuche wurden im 100 g-Maßstab durchgeführt.

Die Ausgangsmonomeren wurden in definierten Verhältnissen (Molverhältnisse siehe Tabelle 2) eingewogen, das Reaktionsgemisch unter Stickstoffatmosphäre und Rühren langsam auf 200°C erhitzt. Im weiteren Verlauf wurde auf 270°C erhitzt und noch 6 Stunden bei 270°C polykondensiert.

Wie aus den in Tabelle 2 angegebenen Bemerkungen zu den Versuchsergebnissen hervorgeht, konnte wegen zu hoher Festpunkte von niedermolekularen Anteilen in einigen Fällen die Polykondensation nicht zu Ende durchgeführt werden.

TABELLE 2

| Vergleichs-versuch | Zusammensetzung der Ausgangsmono-meren (Mol—%) | | | | $\eta_{rel}$ | Bemerkungen zum Produkt |
|---|---|---|---|---|---|---|
| | Azelain-säure | Isophthal-säure | Adipin-säure | Diamin x) | | |
| A | 30 | 70 | — | 100 (I) | 2,0 | sprode, zu hohe SV |
| B | 30 | 35 | 35 | 100 (I) | 2,6 | wenig transparent, zu hohe SV |
| C | 60 | — | 40 | 70 (I) 30H | 3,3 | Vicat = 105°C |
| D | 100 | — | — | 80 (I) 20H | 2,2 | Vicat · 120°C, nicht transparent |
| E | 80 | 20 | — | 100 (IV) | 1,6 | Spröde |
| F | 80 | 20 | — | 70 (IV) 30H | 1,9 | Spröde |

x) (I) = hydr. Diaminodiphenylmethan (I)

(IV) = hydr. Diaminodiphenylmethan (IV) :  60 Mol % 4,4'-Diaminodicyclohexylmethan

34 Mol % 2,4'-Diaminodicyclohexylmethan

·6     2,2'-Diaminodicyclohexylmethan

H  = Hexamethylendiamin

SV = Schmelzviskosität

## Patentansprüche

1. Transparente Copolyamide mit einer relativen Viskosität von mindestens 2,2 (gemessen in einer 1%igen Lösung in m-Kresol bei 25°C) erhalten durch Polykondensation von äqivalenten Mengen von Diaminodicyclohexylmethanen und gegebenenfalls weiterer Diaminen und von Azelainsäure enthaltenden Dicarbonsäuregemischen, dadurch gekennzeichnet, daß

1) als Diaminodicyclohexylmethane 70—100 Mol-% eines Gemisches stellungsisomerer Diaminodicyclohexylmethane, das sich zusammensetzt aus

a) 70—99 Mol-% 4,4'-Diamino-Isomeren

b) 1—30 Mol-% 2,4'-Diamino-Isomeren

c) 0—2 Mol-% 2,2'-Diamino-Isomeren und

2) als weitere Diamine 0—30 Mol-% eines nichtcyclischen, aliphatischen Diamins mit $C_6$—$C_{12}$ und/oder eines von den unter 1) genannten Diaminodicyclohexylmethanen unterschiedlichen cycloaliphatischen Diamins mit $C_8$—$C_{15}$, wobei das molare Verhältnis aller cycloaliphatischer Diamine aus 1) und 2) zu den nichtcyclischen, aliphatischen Diaminen mindestens 4:1, vorzugsweise mindestens 5:1, betragen soll und die Summe aus a)—c) bzw. 1)—2) immer 100 Mol-% ergeben muß, verwendet werden und

3) das Azelainsäure enthaltene Dicarbonsäuregemisch sich aus

d) 50—100 Mol-% Azelainsäure und

e) 50—0 Mol-% Isophthalsäure und/oder Adipinsäure
zusammensetzt,

wobei sich entweder die Dicarbonsäurekomponente aus wenigstens 2 Dicarbonsäuren oder die Diaminokomponente aus dem unter 1) genannten Isomerengemisch und wenigstens einem unter 2) genannten Diamin zusammensetzen und die Summe aus d) + e) immer 100 Mol-% betragen muß.

2. Copolyamide gemäß Anspruch 1, dadurch gekennzeichnet, daß 80—100 Mol-% einer Mischung stellungisomerer Diaminodicyclohexylmethane und 0—20 Mol-% der Diaminkomponenten 2) verwendet werden.

3. Copolyamide gemäß Anspruch 1 und 2, dadurch gekennzeichnet, daß die Mischung stellungisomerer Diaminodicyclohexylmethane aus

75—95 Mol-% der Komponenten a)

3—20 Mol-% der Komponenten b) und

0— 1 Mol-% der Komponenten c) besteht:

4. Copolyamide gemäß Ansprüchen 1—3, dadurch gekennzeichnet, daß die Komponente 3) aus 70—85 Mol-% Azelainsäure und 30—15 Mol-% Isophthalsäure und/oder Adipinsäure besteht.

5. Copolyamide gemäß Ansprüchen 1—4, dadurch gekennzeichnet, daß sie nur durch Polykondensation der Komponenten 1) und einer Mischung aus Azelainsäure und Isophthalsäure bzw. Adipinsäure erhalten wurden.

6. Copolyamide gemäß Ansprüchen 1—5, dadurch gekennzeichnet, daß als acyclische aliphatische Diamine Hexamethylendiamin oder Trimethylhexamethylendiamin verwendet werden.

7. Formkörper bestehend aus Copolyamiden gemäß Ansprüchen 1—6.

## Claims

1. Transparent copolyamides having a relative viscosity of at least 2.2 (determined in a 1% solution in m-cresol at 25°C) obtained by the polycondensation of equivalent amounts of diaminodicyclohexyl methanes and optionally further diamines and of dicarboxylic acid mixtures containing azelaic acid, characterized in that

1) as diaminodycyclohexyl methanes 70—100 mol percent of a mixture of positional isomeric diaminodicyclohexyl methanes are used, which mixture is composed of

a) 70—99 mol percent of 4,4'-diamino isomers,

b) 1—30 mol percent of 2,4'-diamino isomers and

c) 0—2 mol percent of 2,2'-diamino isomers and

2) as further diamines 0—30 mol percent are used of a $C_6$—$C_{12}$ acyclic aliphatic and/or of a $C_8$—$C_{15}$ cycloaliphatic diamine different from the diaminodicyclohexyl methanes mentioned under 1), such that the molar ratio of all the cycloaliphatic diamines from 1) and 2) to the acyclic aliphatic diamines is at least 4:1, preferably 5:1, and the sum of a)—c) and of 1)—2), respectively, is always 100 mol percent and

3) the dicarboxylic acid mixture containing azelaic acid is composed of

d) 50—100 mol percent of azelaic acid and

e) 50—0 mol percent of isophthalic acid and/or adipic acid,

such that either the dicarboxylic acid component is composed of at least 2 dicarboxylic acids or the diamine component is composed of the isomeric mixture mentioned under 1) and at least one diamine mentioned under 2) and the sum of d) + e) must always be 100 mol percent.

2. Copolyamides according to claim 1, characterized in that 80—100 mol percent of a mixture of positional isomeric diaminocyclohexyl methanes and 0—20 mol percent of the diamine components 2) are used.

3. Copolyamides according to claims 1 and 2, characterized in that the mixture of positional isomeric diaminodicyclohexyl methanes consists of

75—95 mol percent of the components a)

3—20 mol percent of the components b) and

0—1 mol percent of the components c).

4. Copolyamides according to claims 1 to 3, characterized in that the component 3) consists of 70—85 mol percent of azelaic acid and 30—15 mol percent of isophthalic acid and/or adipic acid.

5. Copolyamides according to claims 1 to 4, characterized in that they were obtained merely by polycondensation of the components 1) and a mixture of azelaic acid and isophthalic acid or adipic acid.

6. Copolyamides according to claims 1 to 5, characterized in that hexamethylene diamine or trimethyl hexamethylene diamine are used as cyclic aliphatic diamines.

7. Moulded articles consisting of copolyamides according to claims 1 to 6.

## Revendications

1. Copolyamides transparents de viscosité relative égale à au moins 2,2 (mesurée sur une solution à 1% dans le m-crésol à 25°C), obtenus par polycondensation de quantités équivalents de diaminodicyclohexylméthanes, et le cas échéant d'autres diamines, et de mélanges d'acides dicarboxyliques contenant de l'acide azélaïque, caractérisés en ce que:

1) on utilise comme diaminodicyclohexylméthanes, 70 à 100 moles % d'un mélange de diaminodicyclohexylméthanes isomères de position, qui se compose:

a) de 70 à 99 moles % d'isomère 4,4'-diamino
b) de l à 30 moles % d'isomère 2,4'-diamino
c) de 0 à 2 moles % d'isomère 2,2'-diamino et

2) on utilise comme autres diamines, 0 à 30 moles % d'une diamine aliphatique non cyclique ayant 6 à 12 atomes de carbone et/ou d'une diamine cycloaliphatique différente des diaminodicyclohexylméthanes mentionnés en 1), ayant 8 à 15 atoms de carbone, le rapport molaire de toutes les diamines cycloaliphatiques de 1) et 2) aux diamines aliphatiques non cycliques devant au moins être égal à 4:1 et de préférence au moins égal à 5:1, et la somme de a) — c) ou 1) — 2) devant toujours être égale à 100 moles %, et

3) le mélange d'acides dicarboxyliques contenant de l'acide azélaïque se compose:

d) de 50 à 100 moles % d'acide azélaïque et
e) de 50 à 0 moles % d'acide isophthalique et/ou d'acide adipique,

le composant acide dicarboxylique devant être formé d'au moins deux acids dicarboxyliques ou bien le composant diamino devant être formé du mélange d'isomères indiqué en 1) et d'au moins une diamine mentionnée en 2) et la somme d) + e) devant toujours s'élever à 100 moles %.

2. Copolyamides suivant la revendication 1, caractérisés en ce qu'on utilise 80 à 100 moles % d'un mélange de diaminodicyclohexylméthanes isomères de position et de 0 à 20 moles % des composants diaminés 2).

3. Copolyamides suivant l'une des revendications 1 et 2, caractérisés en ce que le mélange de diaminodicyclohexylméthanes iso-mères de position se compose de:
75 à 95 moles % du composant a)
3 à 20 moles % du composant b) et
0 à 1 mole % du composant c).

4. Copolyamides suivant les revendications 1 à 3, caractérisés en ce que le composant 3) est formé de 70 à 85 moles % d'acide azélaïque et de 30 à 15 moles % d'acide isophthalique et/ou d'acide adipique.

5. Copolyamides suivant les revendications 1 à 4, caractérisés en ce qu'ils ont été obtenus simplement par polycondensation du composant 1) et d'un mélange d'acide azélaïque et d'acide isophthalique ou d'acide adipique.

6. Copolyamides suivant les revendications 1 à 5, caractérisés en ce qu'on utilise comme diamines aliphatiques acyliques l'hexaméthylènediamine ou la triméthylhexa-méthylènediamine.

7. Des pièces moulées constituées par des copolyamides suivant les revendications 1 à 6.